# NOUVEAU FASCICULE DE BREVET EUROPEEN

(11) **EP 0 348 312 B2**
(45) Date de publication et mention de la décision concernant l'opposition: **15.07.1998**
(45) Mention de la délivrance du brevet: 13.01.1993
(21) Numéro de dépôt: 89420217.5
(22) Date de dépôt: 14.06.1989
(51) Int. Cl.: H02B 5/06

(54) **Poste blindé pour réseau à haute tension**
Gekapselte Station für ein Hochspannungsnetz
Shielded station for a high voltage network

(30) Priorité: 20.06.1988 FR 8808352
(43) Date de publication de la demande: 27.12.1989
(73) Titulaire: MERLIN GERIN, F-38240 Meylan (FR)
(72) Inventeur: Messie, Michel, F-38050 Grenoble Cedex (FR)
(74) Mandataire: Hecké, Gérard

(56) Documents cités:
- EP-A- 0 174 251
- EP-A- 0 235 006
- FR-A- 1 533 481
- US-A- 3 987 260
- I.E.E.E. TRANSACTIONS ON POWER DELIVERY vol. PWRD2, no. 3, juillet 1987, New York,USA pages 791 - 798; T. MAEDA ET AL: "Development of D-GIS aimed at easy restoration from internal fault"
- Fachartikel "Neue dreipolig gekapselte SF6-isolierte Schaltanlage 8D8 für 123 bis 145 kV Nennspannung" Siemens Energietechnik 5 (1983), Sonderheft Hochspannungstechnik
- Usage Public Antérieur -Schema electrique de circuit de commutation E36 à E43 equipant un poste à haute tension "Flingern" -bons de livraison, datés de 1987, se rapportant à la fourniture à la compagnie "Stadtwerke Düsseldorf AG" de circuits de commutation de ce type

## Description

L'invention est relative à un poste blindé à haute tension, ayant une enveloppe métallique mise à la terre et remplie d'un gaz isolant à rigidité diélectrique élevée, ladite enveloppe étant subdivisée dans chaque travée en différents compartiments étanches, servant de logement à l'appareillage agencé dans le circuit électrique entre un jeu de barres d'alimentation et un départ, chaque appareillage de coupure et/ou de sectionnement étant encadré par deux sectionneurs de mise à la terre. (voir FR-A- 1533481 et EP-A- 0235006).

Dans un poste, les sectionneurs de mise à la terre sont répartis le long du circuit électnque de chaque travée. Certaines spécifications recommandent la possibilité d'isolation des sectionneurs de mise à la terre pour autoriser des essais électriques en différents points de la travée. Ces essais électriques consistent à injecter un courant test dans le circuit au niveau de chaque sectionneur préalablement isolé, pour mesurer le temps de réponse du disjoncteur, et pour vérifier les caractéristiques des transformateurs de mesure ainsi que les chutes de tension élémentaires le long du circuit de la travée. L'isolation de la totalité des sectionneurs de mise à la terre complique la fabrication d'une travée, et en augmente notablement le coût.

L'objet de l'invention consiste à réaliser un poste blindé simplifié permettant de conserver les possibilités d'essai sur le circuit électrique.

Le poste selon l'invention est défini selon les caractéristiques enoncées à la revendication 1. Il est ainsi possible dans une même travée d'économiser l'isolation sur certains sectionneurs de mise à la terre, sans pour autant limiter les essais électnques sur la travée.

Pour isoler un sectionneur de mise à terre isolable, il suffit de déconnecter une liaison électrique avec la terre. L'injection du courant test peut s'effectuer ensuite par la borne isolée de chaque phase du sectionneur.

Le compartiment disjoncteur est intercalé entre un compartiment de mesure renfermant un transformateur de courant, et deux compartiments jeux de barres superposés contenant chacun un sectionneur d'aiguillage de connexion du disjoncteur soit à un premier jeu de barres, soit à un deuxième jeu de barres. Un sectionneur de mise à la terre isolable est logé dans le compartiment de mesure.

Un sectionneur de mise à la terre isolable est également associé à chaque jeu de barres.

D'autres avantages ressortiront plus clairement de la description qui va suivre de deux modes de réalisation donnés à titre d'exemples non limitatifs, et représentés aux dessins annexés dans lesquels:
- la figure 1 est une vue schématique en élévation du poste blindé selon l'invention, les appareils de coupure et de sectionnement étant représentés en position d'ouverture;
- la figure 2 représente une vue en plan de la figure 1, montrant deux travées adjacentes du poste;
- la figure 3 montre le schéma électrique unifilaire de la travée selon la figure 1;
- la figure 4 représente le schéma électrique unifilaire d'une variante de réalisation.

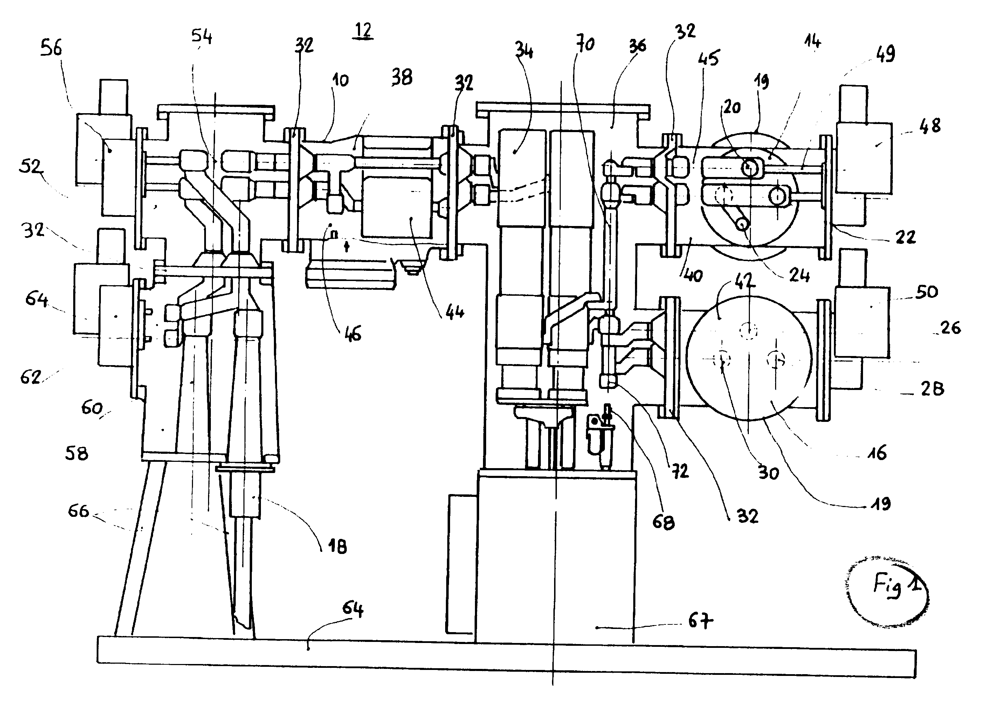

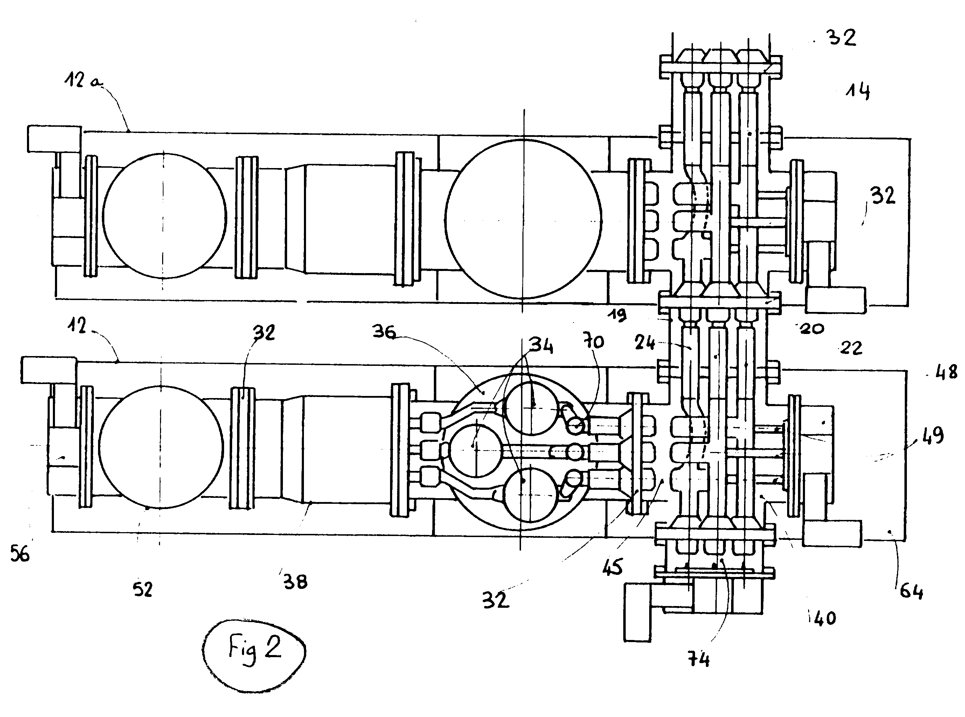

Sur les figures 1 à 3, un poste blindé de distribution à haute tension comporte une enveloppe 10 métallique mise à la terre, et remplie d'un gaz à rigidité diélectrique élevée, notamment de l'hexafluorure de soufre sous pression. Le poste est équipé d'une pluralité de travées 12,12a, (deux sont représentées sur la figure 2), échelonnées à intervalles réguliers le long d'un premier et d'un deuxième jeux de barres 14,16 d'alimentation, chaque travée 12,12a renfermant l'appareillage électrique spécifique d'interruption, de sectionnement et de connexion associé à un départ 18.

Chaque jeu de barres 14, 16 est logé dans une enceinte 19 cylindrique faisant partie de l'enveloppe 10 métallique, et comprend trois barres 20,22,24; 26,28,30 conductrices d'alimentation triphasée. Les deux jeux de barres 14,16 sont superposés dans le sens de la hauteur, et les travées 12,12a se trouvent d'un même côté de l'enceinte 19.

L'enveloppe 10 métallique de chaque travée 12,12a est subdivisée en différents compartiments formés par des tronçons ou caissons élémentaires raccordés les uns aux autres de manière étanche par des bndes ou des embouts de raccordement, avec interposition d'isolateurs supports 32 formant le cloisonnement entre les compartiments adjacents. Les isolateurs supports 32 sont traversés par les barres et les conducteurs électriques de connexion électrique des éléments de l'appareillage contenus dans les compartiments.

Chaque travée 12,12a comporte un disjoncteur tripolaire 34 logé dans un compartiment disjoncteur 36 ayant trois embouts de raccordement, respectivement à un compartiment de mesure 38 sur le côté gauche, et à deux compartiments jeu de barres 40,42 superposés sur le côté droit. Le compartiment de mesure 38 renferme un transformateur de courant 44 triphasé et un sectionneur triphasé de mise à la terre 46.

Le compartiment jeu de barres 40 supérieur associé au premier jeu de barres 14 contient en plus des trois barres conductrices 20,22,24 d'alimentation électrique, un premier sectionneur triphasé d'aiguillage 45 destiné à assurer la connexion électrique du disjoncteur 34 aux barres correspondantes 20,22,24 en position de fermeture, et l'isolement électrique en position d'ouverture. Le sectionneur d'aiguillage 45 est actionné à coulissement par un mécanisme de commande 48 fixé à la bride externe du compartiment 40, tandis que la bride opposée de connexion au compartiment disjoncteur 36 porte les contacts fixes du sectionneur d'aiguillage 45 dont les broches mobiles (non représentées) actionnées par les tiges isolantes 49 s'étendent perpendiculairement aux barres d'alimentation 20,22,24.

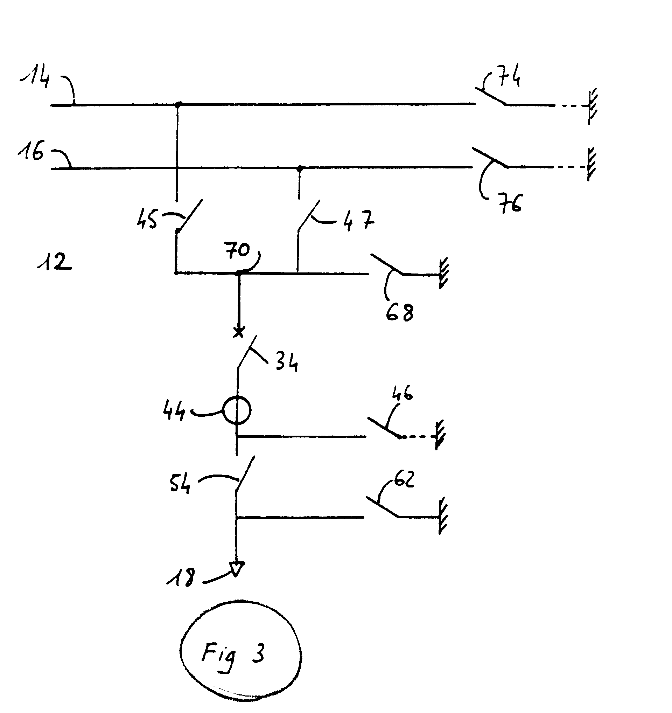

La composition du compartimentjeu de barres 42 inférieur est identique à celle du compartiment 40 supérieur, et est équipée d'un deuxième sectionneur triphasé d'aiguillage 47 (voir figure 3) associé au deuxième jeu de barres 16, et piloté par un mécanisme de commande 50 (figure 1).

Le compartiment de mesure 38 est intercalé entre le compartiment disjoncteur 36 et un compartiment de sectionnement 52 renfermant un sectionneur triphasé de ligne 54 actionné par un mécanisme de commande 56. Les câbles de départ 18 sont connectés à un compartiment de raccordement 58 renfermant une boite à câbles 60 triphasé et un sectionneur triphasé de mise à la terre 62 piloté par un mécanisme de commande 64. Le compartiment de raccordement 58 est placé sous le compartiment de sectionnement 52, et prend appui sur le socle 64 par l'intermédiaire d'un support mécanique 66 fixe.

Sur la partie intermédiaire du socle 64 repose également le caisson 67 de commande du disjoncteur 34. Les pôles de ce dernier s'étendent verticalement à l'intérieur du compartiment disjoncteur 36, lequel renferme en plus un sectionneur triphasé de mise à la terre 68. Le dispositif de connexion électrique 70 commune entre le disjoncteur 34 tripolaire et les deux sectionneurs d'aiguillage 45,47 associés aux deux jeux de barres 14,16, est logé dans le compartiment disjoncteur 36 en s'étendant parallèlement aux pôles du disjoncteur 34. La partie inférieure du dispositif de connexion 70 est équipée de trois contacts fixes 72 coopérant avec les broches mobiles correspondantes du sectionneur triphasé de mise à la terre 68.

Un sectionneur triphasé de mise à la terre 74,76 (voir figures 2 et 3) est associé d'autre part à chaque jeu de barres 14,16 pour assurer la mise à la terre des barres correspondantes 20,22,24; 26,28,30.

La fermeture de l'un des sectionneurs d'aiguillage 45,47 permet d'alimenter chaque travée 12,12a respectivement par le premier ou le deuxième jeu de barres 14,16, le disjoncteur 34 assurant la protection du départ 18. Lors d'une défaillance ou de la mise hors tension pour réparation de l'un des jeux de barres 14,16, les travées 12,12a peuvent être alimentées par l'autre jeu de barres pour maintenir la continuité de service.

On remarque qu'au niveau de chaque travée 12,12a, la répartition des sectionneurs de mise à la terre 74,76,68,46,62 le long du circuit électrique est telle que chaque appareil de coupure ou de sectionnement 45,47,34,54 est encadré par deux sectionneurs de mise à la terre.

Le sectionneur de mise à la terre 68 placé à l'intérieur du compartiment disjoncteur 36 n'est pas isolable, étant donné la liaison électrique permanente de ses broches mobiles avec la masse de l'enveloppe 10 au potentiel de la terre. Par contre, le sectionneur de mise à la terre 46 du compartiment de mesure 38 et les sectionneurs de mise à la terre 74,76 des jeux de barres 14,16 sont isolables, c'est à dire qu'ils possèdent au niveau de chaque phase, une borne d'essai isolée équipée d'une liaison électrique déconnectable avec la terre. La fonction d'isolation des sectionneurs de mise à la terre 74,76,46 est représentée schématiquement sur la figure 3 par des traits pointillés.

L'agencement non isolable du sectionneur de terre 68 permet une réduction du coût de facturation du compartiment disjoncteur 36.

Cette faculté d'isolation de certains sectionneurs de mise à la terre permet d'effectuer différents essais sur chaque travée 12,12a. Après ouverture préalable des deux sectionneurs d'aiguillage 45,47, permettant d'isoler la travée 12,12a correspondante des deux jeux de barres 14,16, le temps de réponse du disjoncteur 34 peut être facilement mesuré par injection d'un signal test dans les bornes d'essai isolées du sectionneur 46 en position fermée. Le disjoncteur 34 et le sectionneur de mise à terre 68 sont préalablement fermés, et le sectionneur de ligne 54 est ouvert. Le courant test circule des bornes d'essai vers la terre à travers le disjoncteur 34 et le sectionneur de mise à la terre 68. Il est également possible par ce même circuit de vérifier les caractéristiques du transformateur de courant 44, notamment le rapport de transformation, en injectant par le sectionneur 46 un courant d'essai à basse tension, ayant une intensité voisine de l'intensité nominale de la travée 12,12a. Ce courant parcourt le circuit primaire du transformateur de courant 44, et il suffit de mesurer les tensions secondaires pour en déduire le rapport de transformation.

La mesure des chutes de tension du circuit principal de chaque travée 12,12a permet également de vérifier le bon état des connexions internes et les résistances des différents tronçons. Cette vérification s'opère par injection d'un courant continu, ayant une intensité de l'ordre de 100A, dans les bornes isolées des sectionneurs 46,74,76. Pour la mesure de la chute de tension dans le circuit du sectionneur de ligne 54, il suffit d'ouvrir le disjoncteur 34, de fermer les sectionneurs de ligne 54 et de mise à la terrre 62 des compartiments 52,58, et d'injecter le courant d'essai par le sectionneur 46 isolable. Pour la mesure de la chute de tension dans le circuit du disjoncteur 34, il faut ouvrir les sectionneurs de ligne 54 et d'aiguillage 45,47, fermer le disjoncteur 34 et le sectionneur de mise à la terre 68 dans le compartiment 36, et injecter le courant d'essai par le sectionneur 46 isolable. La mesure de la chute de tension dans le circuit du premier sectionneur d'aiguillage 45 et du dispositif de connexion 70 avec le disjoncteur 34, s'effectue après mise hors tension du jeu de barres 14 suivie de l'ouverture du disjoncteur 34 et du deuxième sectionneur d'aiguillage 47, de la fermeture du sectionneur de mise à la terre 68 et de l'injection du courant d'essai par le sectionneur 74 isolable du premier jeu de barres 14. La mesure de la chute de tension dans le circuit du deuxième sectionneur d'aiguillage 47 s'opère d'une manière équivalente, après mise hors tension du jeu de barres 16, suivie de l'ouverture du disjoncteur 34 et du premier sectionneur d'aiguillage 45, de la fermeture du sectionneur de mise à la terre 68, et de l'injection du courant d'essai par le sectionneur 76 isolable.

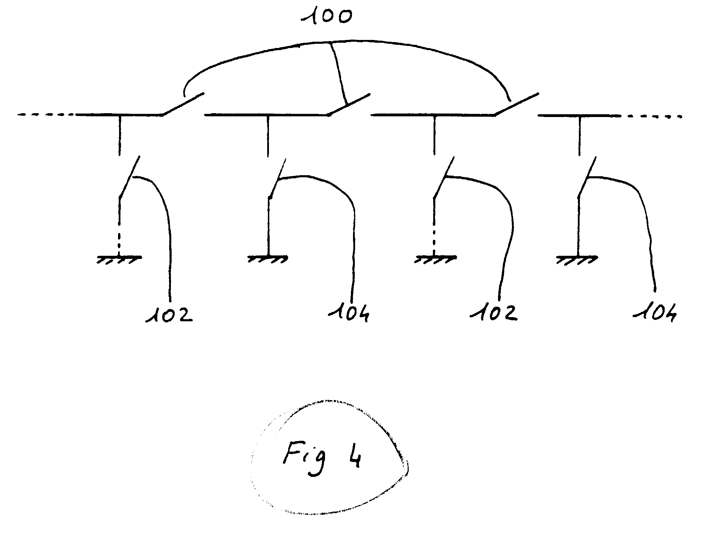

L'invention a été décrite comme étant appliquée à un poste triphasé dont les trois phases sont contenues dans une enveloppe unique, mais elle s'étend bien entendu à des postes à phases séparées, chaque phase ayant sa propre enveloppe mise à la terre. L'architecture du poste peut être modifiée, notamment un nombre plus important de travées, et la disposition du compartiment disjoncteur par rapport aux compartiments des jeux de barres 40,42 et de raccordement 58. Le schéma électrique de la figure 4 montre l'extension de l'invention à tout poste blindé triphasé ou monophasé, dans lequel un appareil de coupure et de sectionnement 100, notamment un disjoncteur, un interrupteur ou un sectionneur de ligne ou d'aiguillage est encadré par deux sectionneurs de mise à la terre 102,104 dont l'un 102 est isolable, et l'autre 104 n'est pas isolable.

Sur la figure 3, le sectionneur de mise à la terre 62 est représenté non isolable, mais il pourrait également être isolable selon le type d'architecture de la travée.

## Revendications

1. Poste blindé à haute tension, ayant une enveloppe (10) métallique mise à la terre et remplie d'un gaz isolant à rigidité diélectrique élevée, ladite enveloppe étant subdivisée dans chaque travée (12, 12a) en différents compartiments étanches, servant de logement à l'appareillage agencé dans le circuit électrique entre un jeu de barres d'alimentation (14, 16) et un départ (18), chaque appareillage de coupure et/ou de sectionnement (54, 34, 45, 47, 100) étant encadré par deux sectionneurs de mise à la terre, caractérisé en ce que l'un des sectionneurs de mise à la terre (46, 74, 76, 102) est isolable, alors que l'autre sectionneur de mise à la terre (68, 62, 104) est non isolable, le sectionneur de mise à la terre (46, 74, 76, 102) isolable comportant une borne d'essai isolée, et une liaison électrique déconnectable avec la terre, et que le compartiment disjoncteur (36) de chaque travée (12) renferme un disjoncteur (34) et un sectionneur de mise à la terre (68) non isolable, ayant des broches mobiles coopérant avec un système de contacts fixes (72) solidaire d'un dispositif de connexion (70) du disjoncteur (34) avec le jeu de barres (14, 16) d'alimentation.

2. Poste blindé selon la revendication 1, caractérisé en ce que le compartiment disjoncteur (36) est intercalé entre un compartiment de mesure (38) renfermant un transformateur de courant (44), et deux compartiments de jeux de barres (40, 42) superposés contenant chacun un sectionneur d'aiguillage (45, 47) de connexion du disjoncteur (34), soit à un premier jeu de barres (14), soit à un deuxième jeu de barres (16), et qu'un sectionneur de mise à la terre (46) isolable est logé dans le compartiment de mesure (38).

3. Poste blindé selon la revendication 2, caractérisé en ce qu'un sectionneur de mise à la terre (74, 76) isolable est associé à chaque jeu de barres (14, 16).

4. Poste blindé selon la revendication 3, caractérisé en ce qu'un compartiment de sectionnement (52) renferme un sectionneur de ligne (54) inséré entre le sectionneur de mise à la terre (46) isolable du compartiment de mesure (38), et une boîte à câbles (60) logée dans un compartiment de raccordement (58) du départ (18).

## Patentansprüche

1. Gekapselte Hochspannungs-Schaltanlage in einem geerdeten und mit einem Isoliergas hoher dielektrischer Festigkeit gefüllten Metallgehäuse (10), das pro Schaltfeld (12, 12a) in mehrere gasdichte Abteile zur Aufnahme der zwischen einer Sammelschieneneinspeisung (14, 16) und einen Abgang (18) in den Stromkreis integrierten Schaltgeräte unterteilt ist, wobei jedes Schalt- und/oder Trennorgan (54, 34, 45, 47, 100) von zwei Erdungsschaltern umgeben ist, dadurch gekennzeichnet, daß jeweils einer der Erdungsschalter (46, 74, 76, 102) freischaltbar und der jeweils andere Erdungsschalter (68, 62, 104) nicht freischaltbar ist, daß der freischaltbare Erdungsschalter (46, 74, 76, 102) eine isolierte Prüfklemme sowie eine trennbare Erdungsverbindung aufweist und daß das Leistungsschalterabteil (36) jedes Schaltfelds (12) einen Leistungsschalter (34) und einen nicht freischaltbaren Erdungsschalter (68) mit beweglichen Kontaktstiften umfaßt, die mit einem feststehenden Kontaktsystem (72) zusammenwirken, das auf einem zwischen dem Leistungsschalter (34) und der Einspeisung (14, 16) angeordneten Verbindungsstück (70) befestigt ist.

2. Gekapselte Hochspannungsanlage nach Anspruch 1, dadurch gekennzeichnet, daß das Leistungsschalterabteil (36) zwischen einem Meßabteil (38), das mit einem Stromwandler (44) bestückt ist, und zwei übereinander liegenden Sammelschienenabteilen (40, 42) angeordnet ist, die jeweils mit einem Netzumschalter (45, 47) zur wahlweisen Versorgung des Leistungsschalters (34) über eine erste Einspeisung (14) oder eine zweite Einspeisung (16) ausgerüstet sind, und daß im Meßabteil (38) ein freischaltbarer Erdungsschalter (46) installiert ist.

3. Gekapselte Hochspannungsanlage nach Anspruch 2, dadurch gekennzeichnet, daß jeder Einspeisung (14, 16) ein freischaltbarer Erdungsschalter (74, 76) zugeordnet ist.

4. Gekapselte Hochspannungsanlage nach Anspruch 3, dadurch gekennzeichnet, daß ein Schaltabteil (52) einen Trennschalter (54) enthält, der zwischen dem freischaltbaren Erdungsschalter (46) des Meßabteils (38) und einem Kabelkasten (60) eingefügt ist, welcher in einem Anschlußabteil (58) des Abgangs (18) untergebracht ist.

## Claims

1. A high voltage metalclad substation having an earthed metallic enclosure (10) filled with a high dielectric strength insulating gas, said enclosure being subdivided in each bay (12, 12a) into different airtight compartments acting as housing for the equipment arranged in the electrical circuit between a supply busbar (14, 16) and a feeder (18), each breaking and/or disconnecting apparatus (54, 34, 45, 47, 100) being bracketed by two earthing switches, characterized in that one of the earthing switches (46, 74, 76, 102) is isolatable whereas the other earthing switch (68, 62, 104) is non-isolatable, the isolatable earthing switch (46, 74, 76, 102) comprising an isolated test terminal and an electrical connection disconnectable with the earth, and that the circuit breaker compartment (36) of each bay (12) contains a circuit breaker (34) and a non-isolatable earthing switch (68) having movable grips co-operating with a system of stationary contacts (72) securedly united to a connection device (70) for connecting the circuit breaker (34) with the supply busbar (14, 16).

2. The metalclad substation according to claim 1, characterized in that the circuit breaker compartment (36) is inserted between a measurement compartment (38) housing a current transformer (44) and two superposed busbar compartments (40, 42) each containing a switching disconnector (45, 47) for connection of the circuit breaker (34) either to a first busbar (14) or to a second busbar (16), and that an isolatable earthing switch (46) is housed in the measurement compartment (38).

3. The metalclad substation according to claim 2, characterized in that an isolatable earthing switch (74, 76) is associated to each busbar (14, 16).

4. The metalclad substation according to claim 3, characterized in that a disconnection compartment (52) houses a line disconnector (54) inserted between the isolatable earthing switch (46) of the measurement compartment (38) and a cable box (60) housed in a connection compartment (58) of the feeder (18).
